(19) Europäisches Patentamt
European Patent Office
Office européen des brevets

(11) **EP 2 565 480 A1**

(12) **EUROPÄISCHE PATENTANMELDUNG**

(43) Veröffentlichungstag:
**06.03.2013 Patentblatt 2013/10**

(51) Int Cl.:
***F16D 3/77*** *(2006.01)*      ***F16D 3/04*** *(2006.01)*

(21) Anmeldenummer: **11007058.8**

(22) Anmeldetag: **31.08.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **IMO Holding GmbH
91350 Gremsdorf (DE)**

(72) Erfinder: **Schuller, Stefan
90419 Nürnberg (DE)**

(54) **Mechanisches Koppelungs- oder Kupplungselement**

(57) Die Erfindung betrifft ein kreis- oder scheibenförmiges mechanisches Maschinenelement, der Gattung nach insbesondere ein mechanisches Element zur Koppelung und / oder Kupplung benachbarter Maschinen- oder Anlagenteile, und zur Übertragung von Momentenwirkung von einem ersten Maschinen- oder Anlagenteil auf ein zweites Maschinen- oder Anlagenteil, insbesondere wobei die zu übertragende Momentenwirkung um eine gemeinsame Drehachse vorhanden ist, und wobei das mechanische Maschinenelement sowohl Mittel zur Ein- und Weiterleitung der mechanischen Kräfte auf seiner ersten Seite besitzt, als auch über derartige Mittel auf der korrespondierenden Seite verfügt, wobei die Lage der Mittel (5) (5') (5") (5 ···) zur Ein- und Weiterleitung der mechanischen Kräfte auf der ersten Seite (7) in einem ersten Abstand (R1) von der gemeinsamen Drehachse (4) liegen und wobei die Lage der Mittel (6) (6') (6") (6···) zur Ein- und Weiterleitung der mechanischen Kräfte auf der korrespondierenden Seite (8) in einem zweiten Abstand (R2) von der gemeinsamen Drehachse (4) liegen.

SCHEMATISCH:

Fig. 5a

EP 2 565 480 A1

**Beschreibung**

Die Erfindung betrifft ein kreis- oder scheibenförmiges mechanisches Maschinenelement, der Gattung nach insbesondere ein mechanisches Element zur Koppelung und / oder Kupplung benachbarter Maschinen- oder Anlagenteile, und zur Übertragung von Momentenwirkung von einem ersten Maschinen- oder Anlagenteil auf ein zweites Maschinen- oder Anlagenteil, insbesondere wobei die zu übertragende Momentenwirkung um eine gemeinsame Drehachse vorhanden ist, und wobei das mechanische Maschinenelement sowohl Mittel zur Ein- und Weiterleitung der mechanischen Kräfte auf seiner ersten Seite besitzt, als auch über derartige Mittel auf der korrespondierenden Seite verfügt.

Maschinenelemente zur Kopplung und / oder Kupplung zweier mechanischer rotierender Teile gibt es seit langer Zeit, da die technische Aufgabe, mechanische Momente von beispielsweise einer Welle auf ein mit dieser Welle gekoppeltes Teil zu übertragen, seit Anbeginn der angewandten Technik existiert. In der Regel spricht man hierbei von Kupplungen. "Kupplungen dienen der festen oder beweglichen, starren oder elastischen und, falls betrieblich bedingt, der ein- und ausrückbaren Verbindung von Wellen und auch anderen Bauteilen zur Übertragung von Drehmomenten." [Roloff, Matek (eds). (1976)]. Der Maschinenbaufachmann trennt nicht schaltbare Kupplungen von schaltbaren Kupplungen. Bei den nicht schaltbaren mechanischen Kupplungen wird in feste (nicht ausgleichende) und nachgiebige (ausgleichende) Kupplungen unterteilt. Beide Gruppen lassen sich weiterhin in drehsteife (starre) und drehnachgiebige Maschinenelemente aufgliedern. Starre mechanische Kupplungen können formschlüssig oder kraftschlüssig oder form- und kraftschlüssig ausgeführt sein. Starre Kupplungen werden für Wellen und Bauteile verwendet, die drehstarr und ohne jede Wellenverlagerung verbunden werden sollen. Das Drehmoment wird dabei quasi ungedämpft übertragen. Die einfachste Form der starren, nicht ausgleichenden und nicht schaltbaren Kupplung ist die Scheibenkupplung.

In der Regel ist es gemäß dem Stand der Technik teilweise so, dass Kupplungsstücke mittels Schraubverbindungen an die Welle und an das gekoppelte oder zu koppelnde Teil angefügt werden, da Schraubverbindungen im Grundsatz lösbare Verbindungen darstellen. Auch genietete, geschweißte oder auf andere Weise gefügte, Verbindungen sind jedoch denkbar und in der Praxis anzutreffen.

Mit sogenannten Scheibenkupplungen werden häufig Wellen mit gleichen oder auch unterschiedlichen Durchmessern starr verbunden. Oft ist diese Scheibenkupplung sehr einfach ausgeführt, indem an den zu verbindenden Wellen-Enden jeweils Flansche angebracht sind. Die Scheibenkupplung ergibt sich, wenn die Flansche verbunden werden, häufig mit Schraubverbindung(en) als Verbindungsmittel. Solche Teile bestehen häufig aus gegossenem Stahl. Alternativen zu solchen Scheibenkupplungen bieten Schalenkupplungen, bei denen ebenfalls Wellen-Enden drehstarr und zentrisch miteinander verbunden werden. Vorteile gegenüber der Scheibenkupplung ist in der Regel eine verbesserte Montierbarkeit, insbesondere einfacherer Ein- und Ausbau. Nachteilig ist aber hier, dass durch Schalenkupplungen in der Praxis eher Wellen mit gleichen oder ähnlichen Durchmessern verbunden werden, als Wellen mit (stark) ungleichen Durchmessern.

Ausgleichende, nicht schaltbare Kupplungen werden häufig dort eingesetzt, wo mit unvermeidbaren axialen, radialen oder winkligen Wellenverlagerungen- oder Wellenverschiebungen gerechnet werden muss. Sie besitzen jedoch keine beziehungsweise kaum elastische Drehbeweglichkeit, das Drehmoment wird daher wie bei festen Kupplungen nahezu starr übertragen. Eine einfache längsnachgiebige Kupplung ist die Klauenkupplung. Sie ermöglicht den Ausgleich axialer Längenänderungen der Wellen, beispielsweise durch Erwärmung oder Einbauungenauigkeiten, und ist besonders bei langen Wellensträngen vorzusehen. Diese nicht schaltbare Kupplung wird auch als ausrückbare Kupplung verwendet. Die "Ausrückung" und oben genannte Nachgiebigkeit bezieht sich stets auf die axiale Richtung, also stets in Richtung der drehbaren Wellenachse. Problematisch ist bei nachgiebigen ausrückbaren Kupplungen, dass mit dem Ausrücken oder mit der Ausrückung in axialer Richtung die Gesamtfläche der momentenübertragenden Kontaktteile verringert wird. Gemäß den elastomechanischen Grundlagen erhöht sich die Flächenpressung auf die noch verbleibende Kontaktfläche der Kupplung, bei gleichbleibendem zu übertragenden Drehmoment, damit gemäß dem Prinzip Flächenpressung gleich Kraft pro Fläche linear. Fazit: In (stark) ausgerücktem Zustand ist die Klauenkupplung auf der dann noch übertragenden Fläche (stark) mehr belastet als in nicht ausgerücktem Zustand. In der Regel lassen Klauenkupplungen eine Nachgiebigkeit nur in axialer Richtung zu.

Als eine Art der quernachgiebigen Kupplungen zum Ausgleich paralleler radialer Achsverschiebungen, das heißt von Achsversatz, sowie auch kleinerer axialer Verschiebungen der Wellen werden querbewegliche Kupplungen, beispielsweise die vergleichsweise aufwendige "Oldham-Kupplung", verwendet. Andere ähnlich aufwendige und mehrteilige Kupplungsarten, welche als längs-, quer- und winkelnachgiebige Kupplungen ausgeführt sein können, sind beispielsweise Bogenzahnkupplungen, bei der eine Kupplungshülse über Innenverzahnungen verfügt, in welche ballig ausgebildete Zähne der Kupplungsnaben eingreifen. Auch sogenannte "Malmedie"-Zahnkupplungen sind im Einsatz und maschinenbautechnisch beherrschbar.

In der Praxis sind quernachgiebige Kupplungen, sowie andere Kupplungsarten, welche längs-, quer- und winkelnachgiebig sind, meist aufwendig beziehungsweise in Form von mehreren an der Kupplungswirkung beteiligten Einzelkomponenten ausgeführt. Häufig ist auch der für die Kupplung benötigte Bauraum aufwendiger beziehungsweise ausladender als bei den relativ einfach ausgeführten starren Kupplungen.

Sehr gebräuchlich für Anwendungsfälle, welche eine gewisse Toleranz in mehreren Richtungen erfordern, sind elastische Bolzenkupplungen. Diese stehen - wie alle drehnachgiebigen elastischen Kupplungen - im Gegensatz zu den starren Kupplungen. Dabei bestehen eine Vielzahl von elastischen Zwischengliedern aus in der Regel zylindrischen, balligen oder gerillten Gummi- beziehungsweise Kunststoffbuchsen. Diese elastischen Bolzenkupplungen sind zwar verhältnismäßig einfach aufgebaut und können sowohl axiale als auch geringe radiale und winklige Verlagerungen der Wellen ausgleichen, sind aber zumeist dafür eingesetzt, um Wellenteile zu verbinden, die annähernd gleichen Wellendurchmesser haben. Weiterhin ergeben sich aus der Konstruktion entsprechende Vorgaben, so sind beispielsweise bei elastischen Bolzenkupplungen der sogenannten "Boflex"-Type die Gummibuchsen nachspannbar, was in der Montage gegebenenfalls zusätzlichen Aufwand durch Nachspannen erfordert, oder aber es sollte stets die Antriebsseite gleich der Bolzenseite sein. Durch diese technischen Einschränkungen beziehungsweise Zusatzanforderungen wird in der Regel eine Universalität im Einsatzbereich dieser Kupplungstype eingeschränkt.

In der Wirkung und im Aufbau ähnlich ist die sogenannte "RUPEX"-Type, bei der die Kunststoffbuchsen ballig ausgeführt sind. Sie liegen am Umfang anfangs nur mit kleinen Flächen auf, wodurch sich bei niedriger Belastung ein verhältnismäßig großer Federweg ergibt.

Gegenwärtig werden zur Drehmomentenübertragung im Sinne einer axial ausgleichenden aber torsionssteifen (und spielfreien) Kupplung auch häufig verhältnismäßig groß aufbauende Metallbalgkupplungen zur drehmomentenübertragenden Verbindung zweier Wellen eingesetzt. Die OS DE 198 12 223 aus dem Offenlegungsjahr 1999 beschreibt eine solche beispielhaft. Man sieht prinzipiell, dass dabei die geometrische Erstreckung in Achsrichtung, also die axiale Breite dieses Maschinenelementes, größer oder annähernd gleich groß ist wie der Durchmesser des Maschinenelementes der Metallbalgkupplung.

Darüber hinaus werden zur Korrektur von Fluchtungsfehlern häufig faltenbalgähnliche Kupplungsteile eingesetzt.

Vergleichbare gegenwärtige Lösungen, insbesondere auch Metallbalgkupplungen, zur torsionssteifen Drehmomentenübertragung, benötigen in der Regel axial einen großen Bauraum oder aber sind komplex aufgebaut beziehungsweise bestehen aus mehreren Einzelkomponenten, welche vor dem Betrieb erst zu einem Gesamtkupplungsbauteil montiert beziehungsweise zusammengefügt werden müssen. Ebenso sind durch die herkömmlichen Kupplungselemente in der Regel die zulässigen Durchmesserunterschiede zwischen dem einen Wellen- oder Maschinenteil und dem anderen damit zu verbindenden Wellen- oder Maschinenteil begrenzt. Aktuell werden daher zumeist Wellen- oder Maschinenteile miteinander verbunden, die über annähernd gleichen Durchmesser verfügen. Die Koppelung und Kupplung benachbarter Maschinen- oder Anlagenteile, welche stark unterschiedlichen Durchmesser besitzen, ist in der Regel nicht angedacht. Dies schränkt den Einsatzbereich herkömmlicher Kupplungen ein. Weiterhin ist nach Stand der Technik ein größerer Unterschied im (Lockreis-)Durchmesser der Anschlussteile nur aufwendig erreichbar und wird nicht durch nur ein Kupplungselement realisierbar. Zusammenfassend gesagt existieren nach dem aktuellen Stand der Technik beherrschbare Kupplungslösungen, das Einsatzspektrum ist eingegrenzt durch die Faktoren Komplexität, Kosten und Bauraum. Je größer der Spielraum an zulässiger an Komplexität, Kosten und Bauraum, desto einfacher ist die Auswahl einer geeigneten Kupplung.

Wenn nur eine sehr begrenzte Komplexität, eine niedrige Kostenobergrenze oder aber ein begrenzter Bauraum zur Verfügung stehen oder aufgrund der konkreten Anwendung zulässig sind, oder wenn im ungünstigsten Fall nur ein einteiliges Bauteil auf begrenztem Bauraum zu geringen Kosten eingesetzt werden darf, so bleibt als einfachste Lösung in der Regel häufig nur eine Scheibenkupplung (diese ist jedoch weder in radialer noch in axialer Richtung nachgiebig). Zudem sind alle bisherigen Kupplungen hauptsächlich darauf ausgelegt, zwei Wellen-Enden zu verbinden. Eine Universalität dergestalt, dass beispielsweise eine Welle mit einem zweiten, flachen Rotationskörper oder allgemein einem Maschinen-und Anlagenteil gekoppelt wird, geht über den regulären Anwendungsbereich von Kupplungen hinaus.

Diese Nachteile des Standes der Technik gereichen der Aufgabe und das die Erfindung initiierende Problem, ein mechanisches Element zu schaffen, welches eine mechanische Welle oder ein anderes Maschinen- beziehungsweise Anlagenteil mit einem weiteren mechanischen rotierenden Teil, auf axial beengtem Raum zu verbinden, wobei gleichzeitig eine hohe Torsionssteifigkeit in Dreh- /Umfangsrichtung und dennoch eine geringe bis moderate Nachgiebigkeit in radialer und axialer Richtung der Koppelung beziehungsweise Kupplung gewährleistet sein soll. Es geht also um die Schaffung eines erfindungsgemäßen mechanischen Maschinenelementes, der Gattung nach insbesondere ein mechanisches Element zur Koppelung beziehungsweise Kupplung benachbarter Maschinen- oder Anlagenteile, insbesondere eine Kupplung, welches gute Belastungseigenschaften einer axial ausgleichenden aber torsionssteifen Kupplung bei gleichzeitig optimierter Baugröße bietet. Es muss eine in der Praxis gut einsetzbare Lösung sein, daher soll der Montagefreundlichkeit der technischen Lösung im besonderen Rechnung getragen werden. Die Lösung darf daher nicht aus vielen Einzelteilen bestehen, sondern soll möglichst einteilig sein, vorbehaltlich der Befestigungsmittel wie beispielsweise Schrauben. Weiterhin soll die Lösung verhältnismäßig kostengünstig und daher leicht und Material sparend ausgestaltet sein.

Die Lösung wird durch die folgend beschriebene Erfindung gegeben: Die erfindungsgemäße Lösung bedient die Probleme der Aufgabenstellung und ist ausgestaltet als ein kreis- oder scheibenförmiges mechanisches Maschinenelement zur Koppelung und / oder Kupplung benachbarter Maschinen- oder Anlagenteile, welches die Übertragung von Momentenwirkung von einem ersten Maschinen- oder Anlagenteil auf ein zweites Maschinen- oder Anlagenteil leistet, wobei die zu übertragende Momentenwirkung um eine gemeinsame Drehachse anliegt. Das erfindungsgemäße mechanische Koppelungs- und / oder Kupplungselement weist Mittel zur Ein- und Weiterleitung der mechanischen Kräfte sowohl auf einer ersten Seite als auch auf der korrespondierenden (Gegen-)Seite auf.

Die Lage der Mittel zur Ein- und Weiterleitung der mechanischen Kräfte auf der ersten Seite liegen dabei in einem ersten Abstand von der gemeinsamen Drehachse und die Lage der Mittel zur Ein- und Weiterleitung der mechanischen Kräfte auf der korrespondierenden (Gegen-)Seite liegen dabei in einem zweiten Abstand von der gemeinsamen Drehachse.

Durch eine einfache und relativ universelle Gestaltung ergeben sich Montage- und Gewichtsvorteile im Vergleich zu den aufwendigen mehrteiligen elastischen Kupplungen nach dem beschriebenen Stand der Technik. Ebenso ergeben sich durch die geringere Anzahl an notwendigen Einzelteilen, ferner auch durch das geringere Gewicht, Kostenvorteile. Aufgrund des verhältnismäßig einfachen Aufbaus oder gar durch Einstückigkeit des erfindungsgemäßen Maschinenelementes lässt sich das Risiko eines Defekts auch auf weniger Teile beschränken. Ein Ausfall im Betrieb und damit ein Verlust der Funktionalität sind somit besser berechen- und beherrschbar, zumal Zuverlässigkeit und Langlebigkeit positiv beeinflusst werden können.

Für den Einbau des erfindungsgemäßen Elementes zwischen den beiden zu verbindenden Maschinen- beziehungsweise Anlagenteilen sind prinzipiell keine Einschränkungen in der Wahl des Verbindungselements notwendig. Es ist daher durchaus denkbar, die Koppelung des erfindungsgemäßen mechanischen Maschinenelementes mit dem einen Maschinenteil beispielsweise mittels dem Verbindungselement Niet- oder Schweißverbindung auszuführen, wobei dies jedoch zu Lasten der Wiederlösbarkeit der Verbindung gehen würde. Die Koppelung mit dem gegenüberliegenden Maschinenteil könnte beispielsweise mittels einer Schraubverbindung realisiert werden. die Koppelung des erfindungsgemäßen mechanischen Maschinenelementes mit dem einen Maschinenteil kann aber beispielsweise auch durch die Verbindung einer Welle mit einer auf der Welle eingesetzten Passfeder geschehen, welche an der Innenseite des erfindungsgemäßen Maschinenelementes angreift (Passfederverbindung). Auf der Gegenseite könnte die Koppelung des erfindungsgemäßen Maschinenelementes ebenfalls mittels einer form- und / oder kraftschlüssigen Verbindung, etwa einer an der äußeren Mantelfläche eingebrachten Verzahnung, welche im Eingriff ist mit der korrespondierend verzahnten Innendurchmesser am zweiten Maschinen- oder Anlagenteil (Zahnwellenverbindung), geschehen.

Auch sind alle anderen gängigen form- und / oder kraftschlüssigen Verbindungsmittel gemäß dem Stand der Technik hierbei ausdrücklich in Verbindung mit dem erfindungsgemäßen Element denkbar und einsetzbar. Im Folgenden wird jedoch in der Hauptsache von dem in der Praxis häufig verwendeten Verbindungselement der Schraubverbindung ausgegangen.

Zur Erfüllung der Funktion des erfindungsgemäßen mechanischen Maschinenelementes ist mit der Geometrie auch die Steifigkeit des verwendeten Materials entscheidend. Vorzusehen sind Stahlwerkstoffe für herkömmliche Aufgaben zur Koppelung oder Kupplung sowie Leichtmetalle beziehungsweise Verbundwerkstoffe für Sondereinsätze mit besonderen Anforderungen. Es sind in einer weiteren Ausgestaltung der Erfindung aber auch Verbundwerkstoffe in Verbindung mit organischen Werkstoffen, oder gar rein organische Werkstoffe wie etwa (verstärkte) Kunststoffe, denkbar. In der Regel sind solche Anwendungsfälle organischer Werkstoffe dann entweder für Geringlastanwendungen oder Anwendungen hoher Leistungsdichte angedacht.

Das erfindungsgemäße Maschinenelement ist in der bevorzugten Ausführungsform einstückig beziehungsweise einteilig ausgestaltet. Es kann aber auch mehrteilig, beispielsweise durch Flanschverschraubung eines faltenartigen Bereichs oder eines Bereiches von allgemein geringerer Steifigkeit (und somit höherer Nachgiebigkeit), ausgeführt werden. Mehrteilige Ausführungen bieten die Möglichkeit der modularen Anpassung an veränderte Anschlussgeometrien und sind daher noch flexibler in der Anwendung, was dem Erfindungsgedanken der Universalität der Erfindung Rechnung trägt.

Kern der Erfindung ist die Ausführung des erfindungsgemäßen mechanischen Maschinenelementes, insbesondere zur Koppelung und Kupplung benachbarter Maschinen- oder Anlagenteile, in Kreis- oder Scheibenform. Durch das erfindungsgemäße Maschinenelement wird die Übertragung von Momenten von dem ersten Maschinen- oder Anlagenteil auf ein zweites Maschinen- oder Anlagenteil ermöglicht, wobei die zu übertragenden Drehmomente um eine gemeinsame Drehachse wirken, und wobei das mechanische Maschinenelement auf seiner einen (Scheiben-)Seite Mittel zur Ein- und Weiterleitung der mechanischen Kräfte besitzt, und die dazu korrespondierende (Scheiben-)Seite ebenfalls solche Mittel aufweist. Die Erfindung besonders charakterisierend ist, dass die Lage der Mittel zur Ein- und Weiterleitung der mechanischen Kräfte (F1) auf der ersten Seite in einem ersten Abstand (R1) von der gemeinsamen Drehachse liegen, und die Lage der Mittel zur Ein- und Weiterleitung der mechanischen Kräfte (F2) auf der korrespondierenden Seite in einem zweiten Abstand (R2) von derselben gemeinsamen Drehachse liegen. Die Erfindung besonders charakterisierend ist der einfache Aufbau und die mögliche Einteiligkeit oder Einstückigkeit.

Weiterhin ist es nach Maßgabe der Erfindung so, dass das mechanische Maschinenelement im Wesentlichen drehmomentsteif ausgeführt ist und dennoch axialen Versatz ausgleicht, sowie in gewissem Umfang tolerant gegenüber einem Verkippen beziehungsweise ein einem Fluchtungsfehler der der ein- und weiterleitenden Wellen ist.

Das mechanische Maschinenelement kann beispielsweise als einteiliges oder einstückiges Vollgussteil ausgeführt sein oder als ein um- oder urgeformter Balg, welcher selbst reib-, form- oder stoffschlüssig mit den Anschlusselemten für die ein-und weiterleitenden Wellen verbunden ist.

Weiterhin ist es nach Maßgabe der Erfindung so, dass bei dem Kreis- oder scheibenförmigen mechanischen Maschinenelement diese Abstände (R1) (R2) von unterschiedlichem Betrag sind, insbesondere unterschiedlich groß. Es ist aber möglich, dass diese Abstände nur geringfügig unterschiedlichen Betrag haben, sodass sie von annähernd ähnlichem Betrag sein können.

Weiterhin ist es nach Maßgabe der Erfindung so, dass bei dem kreis- oder scheibenförmigen mechanischen Maschinenelement dieses mechanische Maschinenelement einen konzentrisch um seine Rotationsachse angeordneten Bereich erhöhter Verformbarkeit (VB) aufweist, welcher sich zwischen den genannten beiden Abständen (R1) (R2) befindet. Dann ist es in der Folge nämlich so, dass, sofern entsprechende Kräfte in dieser Richtung wirken, eine axiale Verformung des Maschinenelementes parallel seiner Rotationsachse auftritt, noch bevor durch diese axiale Verformung andere Bereiche des mechanischen Maschinenelementes verformen werden.

Weiterhin ist es nach Maßgabe der Erfindung so, dass bei dem kreis- oder scheibenförmigen mechanischen Maschinenelement die axiale Verformbarkeit proportional ist zur Fläche des Bereichs der erhöhten Verformbarkeit. Je größer also dieser Bereich der erhöhten Verformbarkeit ist, desto höher ist auch die gesamte axiale Verformung bei Auftreten von axialen Kräften. Insbesondere ist also, unter der Vorraussetzung einer gleich großen Belastung, bei größerer Fläche dieses Bereichs erhöhter Verformbarkeit eine stärkere axiale Verformung des Maschinenelementes wirksam als wenn die Fläche dieses genannten Bereichs flächenmäßig kleiner ist.

Weiterhin ist es nach Maßgabe der Erfindung so, dass bei dem Kreis- oder scheibenförmigen mechanischen Maschinenelement zumindest ein Teil des konzentrischen Bereiches zwischen beiden Abständen nicht ebenflächig gestaltet ist, sondern mindestens eine Erhebung und Vertiefung aufweist oder auch eine Vielzahl von Erhebungen und Vertiefungen aufweist. Dieser Bereich mit Erhebungen und Vertiefungen kann beispielsweise mittels der Fertigungsverfahren Einstichdrehen, Gießen oder Tiefziehen gefertigt worden sein.

Weiterhin ist es nach Maßgabe der Erfindung so, dass bei dem kreis- oder scheibenförmigen mechanischen Maschinenelement der jeweilige Teil des konzentrischen Bereiches zwischen beiden Abständen mäanderförmig oder faltenartig ausgestaltet sein kann. Beispielsweise und insbesondere tritt dieser Bereich, der eine konzentrisch umlaufende Fläche um die Rotationsachse des erfindungsgemäßen kreis- oder scheibenförmigen Elementes bildet, nur zwischen den beiden Abständen auf. Diese konzentrische Fläche wird nachfolgend "konzentrischer Bereich" genannt.

Bezug nehmend auf diese Faltenförmigkeit oder Mäanderförmigkeit ist es so, dass bei dem kreis- oder scheibenförmigen mechanischen Maschinenelement die gestreckte Länge des Materiales in diesem konzentrischen Bereiches größer ist als die Differenz $|R2| - |R1|$ der Beträge der beiden Abstände (R1) (R2).

Der konzentrische Bereich ist laut Maßgabe der Erfindung gekennzeichnet durch eine höhere axiale Nachgiebigkeit als die (anderen) Bereiche, etwa diese (anderen) Bereiche in denen alle oder einige der Mittel zur Ein- und Weiterleitung der mechanischen Kräfte (F1) (F2) angebracht sind. Beispielsweise und insbesondere ist der konzentrische Bereich durch eine nach der Belastung zurückfedernd wirkende Elastizität charakterisiert, beispielsweise durch Federstahl - artige Elastizität. Weiterhin ist es nach Maßgabe der Erfindung so, dass bei dem kreis- oder scheibenförmigen mechanischen Maschinenelement dieses mechanische Maschinenelement zum Großteil aus Stahlwerkstoffen besteht, beispielsweise aber auch aus organischen Werkstoffen bestehen kann, insbesondere aus spritzgießbaren Kunststoffen. Aber auch Verbundwerkstoffe sind als Material - entweder für den konzentrischen Bereich, oder aber für die anderen Bereiche - denkbar.

Weiterhin ist es nach Maßgabe der Erfindung so, dass bei dem kreis- oder scheibenförmigen mechanischen Maschinenelement vorhandene mäanderförmige-oder faltenartige Bereiche aus einem anderen Werkstoff oder Material ausgeführt sein können als die anderen Bereiche des Maschinenelements, insbesondere vorhandene faltenartige Bereiche hergestellt sind aus verformten Blechteilen oder hergestellt sind aus metallischen Gusswerkstoffen oder hergestellt sind aus Kunststoff, insbesondere auch hergestellt sind aus Verbundwerkstoff.

Weiterhin ist es nach Maßgabe der Erfindung so, dass bei dem kreis- oder scheibenförmigen mechanischen Maschinenelement die Mittel zur Ein- und Weiterleitung der mechanischen Kräfte (F1) (F2) verschiedenartig ausgestattet sein können, jedoch stets jeweils mindestens eine kraftschlüssige oder formschlüssige oder kraft- und formschlüssige Verbindung zwischen dem Maschinenelement und dem jeweiligen Maschinen- oder Anlagenteil herstellen.

Weiterhin ist es nach Maßgabe der Erfindung so, dass bei dem kreis- oder scheibenförmigen mechanischen Maschinenelement die Mittel zur Ein- und Weiterleitung der mechanischen Kräfte (F1) (F2) verschiedenartig ausgestattet sein können, beispielsweise als unterschiedlich oder auch identisch geformte Ausnehmungen zur formschlüssigen Aufnahme von Passelementen oder Zahnelementen. Diese Mittel zur Ein- und Weiterleitung der mechanischen Kräfte (F1) (F2) können im konkreten Fall Schraubverbindung sein, können aber auch Befestigungselemente für Niet,- oder Stiftverbindungen sein, also auch Ausnehmungen. Auch Ausnehmungen für Passfederverbindungen oder Verbindungen nach dem "Nut- und Feder-Prinzip" gehören beispielsweise dazu. Diese Mittel zur Ein- und Weiterleitung der mechanischen Kräfte können auch als Flansche für Schweiß- oder Lötverbindungen ausgeführt sein.

Generell kann nach Maßgabe der Erfindung die Verbindung des ersten Maschinen-oder Anlagenteils mit dem Maschinenelelement, als auch die des zweiten Maschinen- oder Anlagenteils mit dem Maschinenelelement entweder über eine formschlüssige Verbindungsmethode erfolgen, oder über eine kraftschlüssige Verbindungsmethode, oder auch über eine stoffschlüssige Verbindungsmethode (Löten; Schweißen; Kleben). Es wird dabei von Folgendem Ausgegangen: Kraftschlüssige Verbindungen setzen eine Normal-Kraft auf die miteinander zu verbindenden Flächen voraus. Ihre gegenseitige Verschiebung ist verhindert solange die durch die Haftreibung bewirkte Gegen-Kraft nicht überschritten wird.

Bei einer formschlüssigen Verbindung ist einer der Verbindungspartner dem anderen Verbindungspartner im Weg. Bei Belastung im Betrieb wirken Druckkräfte in der Regel rechtwinklig zu den Flächen der Verbindungspartner. Solche Sperrungen kommen dann in mindestens einer Richtung vor. Stoffschlüssige Verbindungen werden alle Verbindungen genannt, bei denen die Verbindungspartner durch atomare oder molekulare Kräfte zusammengehalten werden. Sie sind gleichzeitig nicht lösbare Verbindungen, die sich nur durch Zerstörung der Verbindungsmittel trennen lassen.

Weiterhin ist es nach Maßgabe der Erfindung so, dass die axiale Breite (S) des Maschinenelementes wesentlich geringer ist als dessen Durchmesser (D). Vorteilhaft im Hinblick auf Bauraumersparnis ist es, wenn diese Breite höchstens ein Drittel des Durchmessers beträgt, noch besser ist es wenn die Breite höchstens ein Fünftel des Durchmessers beträgt. Die Breite sollte daher vorzugsweise minimiert werden und ist in Hinblick auf die zu übertragenden Lasten zu wählen. Beispielsweise betragen D = 30 cm und S = 3 cm.

Schlussendlich ist es nach Maßgabe der Erfindung so, dass dessen Koppelung oder Kuppelung an benachbarte Maschinen- oder Anlagenteile nicht zwangsweise zentrisch zu dessen Drehachsen zu erfolgen hat, sondern dass die jeweilige Mittensachse (M) des jeweiligen Maschinen- oder Anlagenteiles parallel versetzt sein kann zur Rotations- oder Mittelachse des erfindungsgemäßen mechanischen Maschinenelementes und dies auch eine der gewollten Anwendungsmöglichkeiten ist.

Weitere Merkmale, Eigenschaften, Vorteile und Wirkungen auf der Grundlage der Erfindung ergeben sich aus den folgenden Beschreibungen einer bevorzugten Ausführungsform der Erfindung, sowie weiteren vorteilhaften Ausgestaltungen der Erfindung, sowie anhand der Zeichnungen. Hierbei zeigen:

Fig. 1 und Fig. 1a zeigen eine herkömmliche Scheibenkupplung nach Stand der Technik mittels Verschraubung zweier Wellen-Enden an dem jeweiligen Flansch, wobei eine zweiteilige Zwischenscheibe (Zwischenscheibe in Seitenansicht siehe Fig. 1 a) zwischen beiden Wellen eingelegt und mit verschraubt ist.

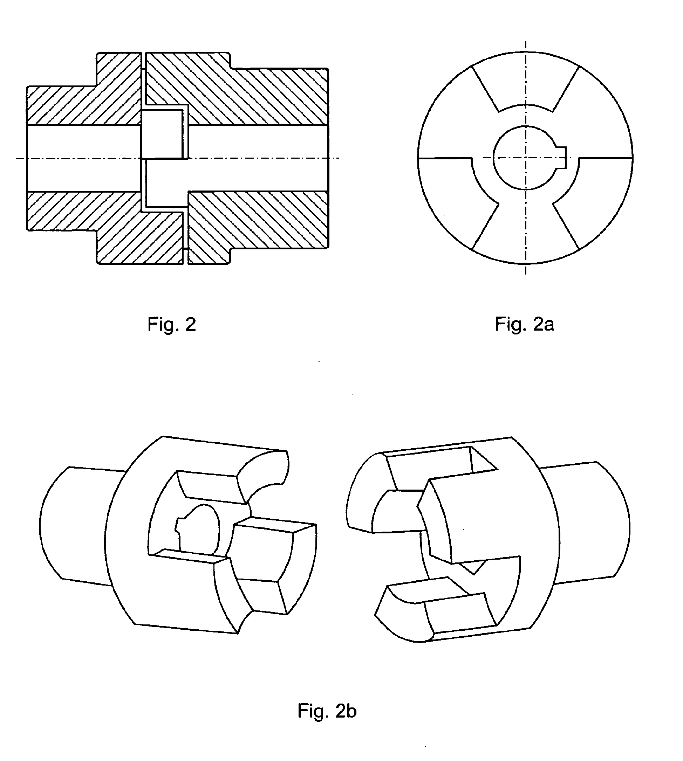

Fig. 2 sowie Fig. 2a und Fig. 2b zeigen eine in axialer Richtung nachgiebige herkömmliche Klauenkupplung nach Stand der Technik. Die Nachgiebigkeit ergibt sich durch die axiale Verschiebbarkeit der beiden gegenüber liegenden Kupplungsteile.

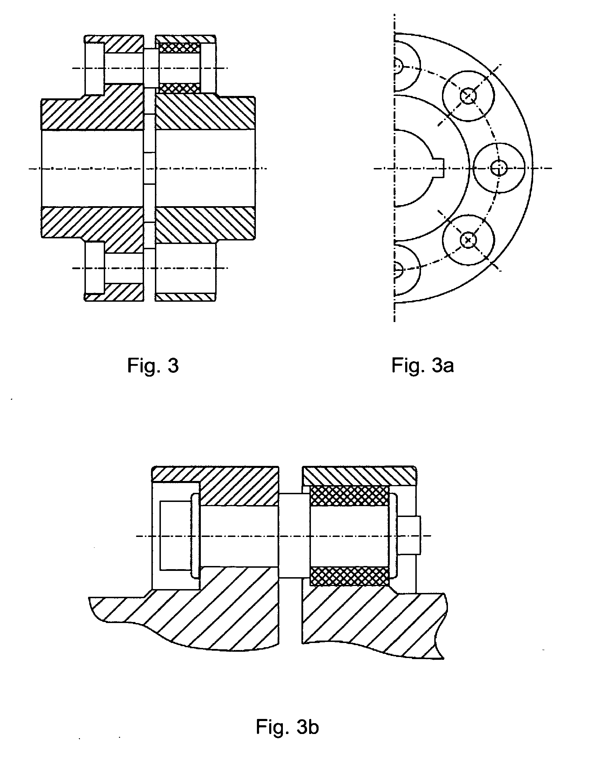

Fig. 3 sowie Fig. 3a und Fig. 3b zeigen nach Stand der Technik eine sogenannte "BoFlex"-Kupplung. Fig. 3 zeigt den Querschnitt durch eine mittels der Kupplung gekoppelte Konstruktion, Fig. 3a zeigt die halbe Seitenansicht einer Ausführung mit lösbaren Bolzen. Fig. 3b zeigt die Ausführung mit nachspannbaren Gummibuchsen.

Fig. 4 zeigt nach Stand der Technik eine axial elastische aber torsionssteife (und spielfreie) Metallbalgkupplung nach Offenlegungsschrift DE 198 12 223 A1.

Fig. 5 und Fig. 5a sowie Fig. 5b und Fig. 5c zeigen jeweils stark vereinfacht die Wirkprinzipien der Erfindung in vier verschiedenen Beispielen, welche zwischen zwei Maschinen- beziehungsweise Anlagenteilen eingesetzt wird in schematischer Ansicht senkrecht zur Drehachse. Angezeigt werden die gemeinsame Drehachse (der Drehung) und beispielhaft dargestellte Kraftwirkung (F1) (F2) sowie Drehmomentenwirkung (M).

Fig. 6 zeigt das erfindungsgemäße Element mit schraubbarer Flanschverbindung außen und fügbarer Passfederverbindung innen.

Fig. 6a zeigt das erfindungsgemäße Element mit fügbarer Keilwellenverbindung mit verzahnten Aussparungen innen und schraubbarer Flanschverbindung außen.

Fig. 7 sowie Fig. 7a sowie Fig. 7b zeigen das erfindungsgemäße Element mit schraubbarer Flanschverbindung außen und Spannelement, beispielsweise Spannring, innen. Es werden die Vorderansicht Darstellung gezeigt (Fig. 7a) sowie die Seitenansicht (Fig. 7b) und die perspektivische Darstellung (Fig. 7).

Fig. 8 zeigt das erfindungsgemäße Element das erfindungsgemäße Element mit Keilwellenverbindung mit Verzahnung (Zahnkranz) außen und schraubbarer Flanschverbindung an der inneren Seite.

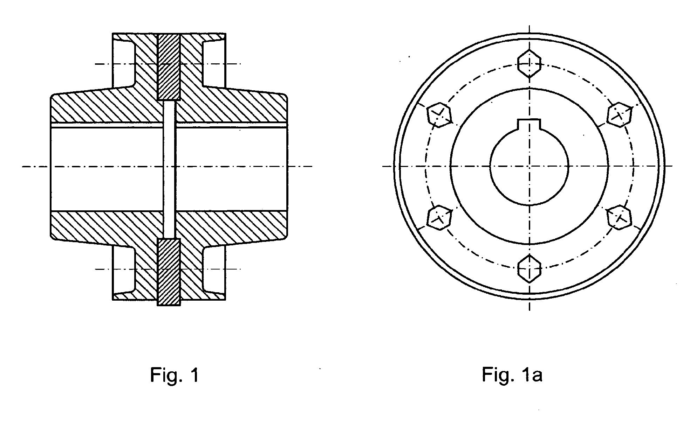

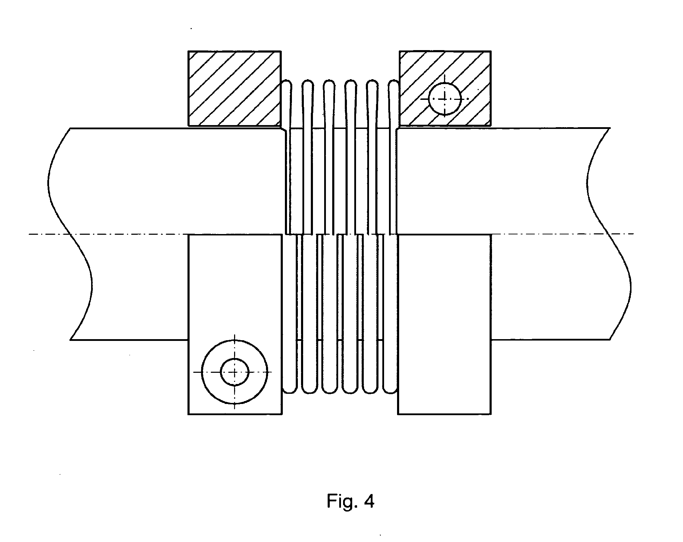

Im Folgenden werden diese Zeichnungen, darstellend beispielhafte Ausgestaltungen der Erfindung, beschrieben. Die Figuren Fig. 1 mit einschließlich Fig.4 zeigen dabei den grundsätzlichen Stand der Technik wie eingangs beschrieben.

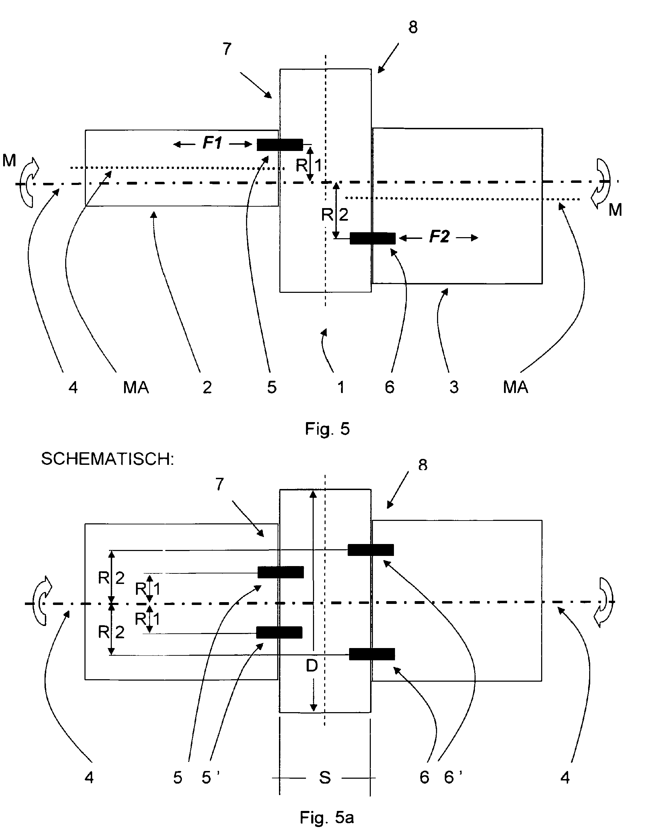

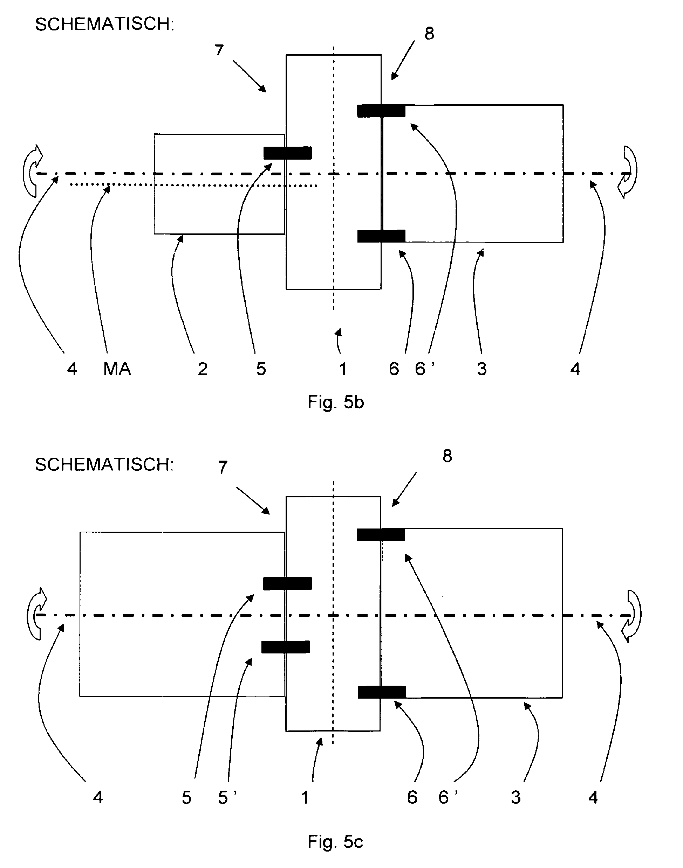

Die Figuren Fig. 5 sowie Fig. 5a sowie Fig. 5b sowie Fig. 5c zeigen eine stark vereinfachte und schematische Weise der Zusammenschaltung aus Erfindung (1), mittig dargestellt, und den durch die Erfindung gekoppelten und miteinander zu verbindenden Maschinen- oder Anlagenteile (2) (3). Linkerhand ist jeweils das erste Maschinen- oder Anlagenteil (2) schematisch abgebildet, rechterhand ist jeweils das zweite Maschinen- oder Anlagenteil (3) abgebildet. Wie die Figuren zeigen, wirken stets in einem Umlaufsinn gerichtete Momente (M) um eine gemeinsame Drehachse (4). Das Maschinenelement (1) überträgt infolge der Kopplung mit den beiden Anlagenteilen (2) (3) dieses Moment vom ersten auf den zweiten Anlagenteil. Die Angriffspunkte der Kopplungskräfte (F1) (F2) sind dabei stets in einem gewissen Abstand von der Drehachse (4) angebracht; und zwar in einem ersten Abstand (R1) beim ersten Anlagenteil (2) und in einem zweiten Abstand (R2) bei dem zweiten Anlagenteil (3). Dem ersten Anlagenteil (2) zugewendet ist dabei stets die erste Seite (7) des Maschinenelementes (1) und dem zweiten Anlagenteil (3) zugewendet ist dabei stets die gegenüberliegende, zweite Seite (8) des Maschinenelementes (1).

Die zu koppelnden Maschinen- und Anlagenteile (2) (3) können durch das Maschinenelement (1) auch so gekoppelt beziehungsweise gekuppelt werden, dass die gemeinsame Drehachse (4), welche stets gleichzeitig die Rotationsachse des Maschinenelementes (1) darstellt, nicht direkt mit der jeweiligen Mittenachse (MA) eines oder beider Maschinen- und Anlagenteile (2) (3) zusammenfällt, sondern so gekoppelt werden, dass die jeweilige Mittenachachse (MA) zur gemeinsamen Drehachse (4) parallel versetzt angeordnet ist. Zwar ergeben sich dann in der Praxis Unwuchten bei mechanischer Drehung um die Drehachse (4) sowie eine inhomogene aus dieser "unrunden" Drehung resultierende Kräfteverteilung, aber die Koppelwirkung des Maschinenelementes (1) wird dadurch nicht prinzipiell beeinträchtigt.

Das Maschinenelement (1) verfügt über einen Durchmesser (D) und eine Breite (s). Wie die Figuren Fig. 5 sowie Fig. 5a sowie Fig. 5b sowie Fig. 5c andeuten, ist es möglich, die Verbindungsstellen (5) (5 ') (5 ") (5···) (6) (6 ') (6 ") (6···) beziehungsweise die jeweiligen Mittel (5) (5 ') (5 ") (5···) (6) (6 ') (6 ") (6···) zur Ein-und Weiterleitung der mechanischen Kräfte (F1) (F2) am ersten (2) und zweiten (3) Maschinen- beziehungsweise Anlagenteil auf beiden Seiten (7) (8) an jeweils unterschiedlicher Position zu gestalten.

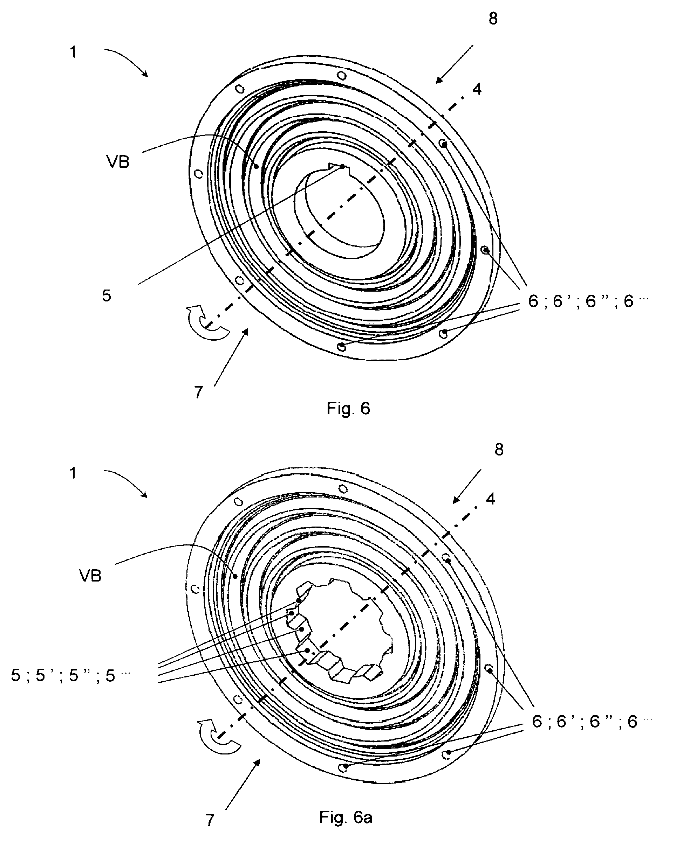

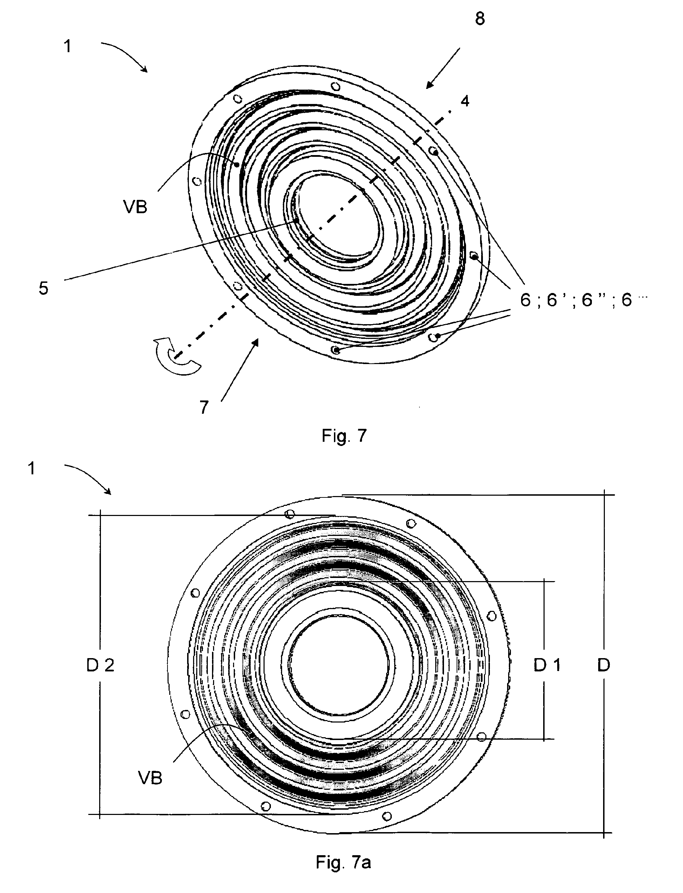

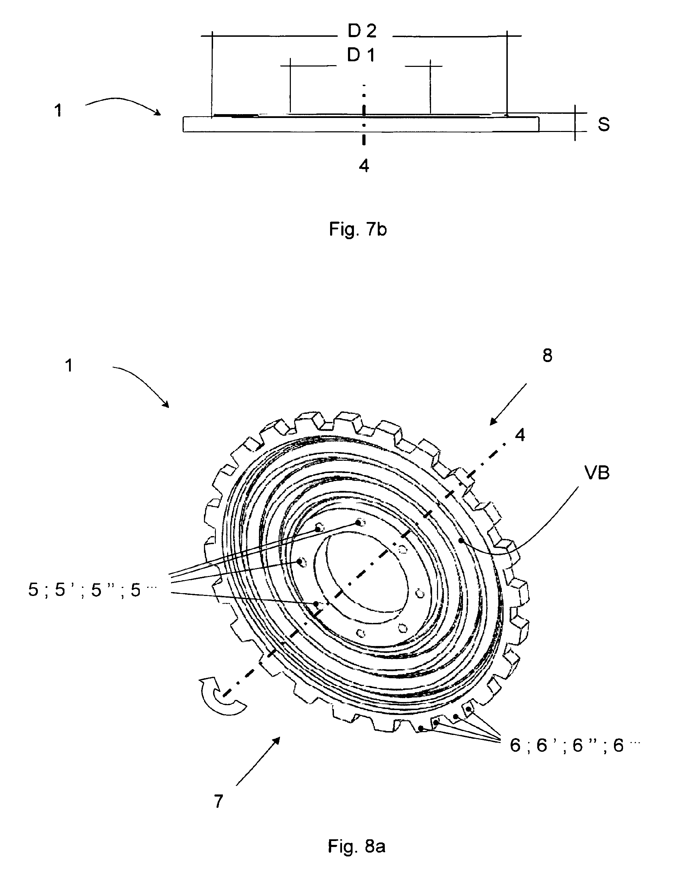

Die verbleibenden Figuren Fig. 6 sowie Fig. 6a sowie Fig. 7 sowie Fig. 7a sowie Fig. 7b sowie Fig. 8a zeigen beispielhafte Ausgestaltungen der Erfindung (1). Dargestellt ist jeweils ein rotationssymmetrisches Maschinenelemente (1), welches sich in Betrieb um die eigene Rotationsachse (4) dreht. Das Maschinenelement ist von wesentlich geringerer Breite (S) im Verhältnis zu seinem Durchmesser (D) gekennzeichnet, wie Fig. 7b zeigt. Fig. 7b zeigt ebenso deutlich und in Seitenansicht, dass ein signifikanter konzentrischer Bereich, liegend zwischen den Durchmessern (D1) und (D2) existieren kann. Dieser Bereich kann als Verformbereich (VB) ausgeführt sein und weist dann eine entschieden leichtere Verformbarkeit auf als die anderen Bereiche des Maschinenelementes (1). Dieser Vorteil kommt insbesondere zum Tragen wenn das Maschinenelement (1) zwei Maschinen- oder Anlagenteile (2) (3) koppelt, und axiale Kräfte wirken. Das Maschinenelement (1) kann infolge dieses integrierten Verformbereiches (VB) diese Kräfte aufnehmen und ausgleichen. Das Maschinenelement (1) wird also in axialer Richtung mehr oder minder nachgiebig für axiale Verformungen, was dem Ausgleich solcher axialen Schübe dient.

Figur Fig. 7a zeigt diesen zwischen den Durchmessern (D1) und (D2) liegenden Verformbereich (VB) in der Vorderansicht. Beispielhaft ist dieser Verformbereich (VB) ausgeführt als eine mäanderförmige- oder faltenartige Anordnung. Diese Falten-oder Mäander- oder gar Lamellenartige Ausführungsform bietet beispielsweise eine erhöhte Verformbarkeit in axialer Richtung.

Die anderen Figuren Fig. 6 sowie Fig. 6a sowie Fig. 7 sowie Fig. 7a sowie Fig. 8a zeigen hingegen Perspektiven des Maschinenelementes (1). Stets wichtig ist bei diesen Ausgestaltungen der Erfindung um die oben beschriebene axiale Nachgiebigkeit beziehungsweise Verformbarkeit zu gewährleisten, dass die einerseitigen Verbindungsstellen beziehungsweise Mittel (5) (5') (5 ") (5···) zur Einleitung oder Übertragung der mechanischen Kräfte (F1) auf der einen Seite des oben genannten Verformungsbereiches (VB) liegen, und die anderseitigen Verbindungsstellen beziehungsweise Mittel (6) (6') (6 ") (6···) zur Übertragung der mechanischen Kräfte (F2) auf der anderen Seite auf der entgegengesetzten Seite des oben genannten Verformungsbereiches (VB) liegen. Beispielsweise sind auf der ersten Seite (7) des Maschinen- oder Anlagenteils (2) diese Verbindungsstellen im Abstand R1= 10 cm angebracht, und auf der zweiten Seite (8) des Maschinen- oder Anlagenteils (3) diese Verbindungsstellen im Abstand R2= 30 cm angebracht. Der radiale Verformbereich zwischen diesen Abständen (R1) (R2) beziehungsweise der Verformbereich zwischen den zugehörigen Durchmessern D1 = 0,2 m und D2 = 0,6 m würde dann beispielhaft betragen hinsichtlich des Radius : $\Delta R = |R2| - |R1|$ = 20 cm. Die gesamt verformbare Fläche VB würde in diesem Beispiel dann betragen:

$$VB = [\ \pi \cdot (R2)^2 - \pi \cdot (R1)^2\ ] = \pi \cdot [\ (R2)^2 - (R1)^2\ ] =$$

$$VB = [\ \tfrac{1}{4} \cdot \pi \cdot (D2)^2 - \tfrac{1}{4} \cdot \pi \cdot (D2)^2\ ] = \tfrac{1}{4} \cdot \pi \cdot [\ (D2)^2 - (D1)^2\ ] = 0{,}25\ m^2$$

Wie in den perspektivischen Darstellungen des Maschinenelementes (1) aus den Figuren Fig. 6 sowie Fig. 6a sowie Fig. 7 sowie Fig. 8a weiterhin erkennbar wird können die Verbindungsstellen beziehungsweise Mittel (5) (5') (5 ") (5···) sowie (6) (6 ') (6 ") (6···) sehr unterschiedliche Ausprägungen besitzen. Es ist beispielsweise auf der ersten Seite (7) eine formschlüssige Verbindung mittels einer Passfeder [siehe Verbindungsmittel (5) in Fig. 6] denkbar, wohingegen auf der zweiten Seite (8) kraftschlüssige Verbindungen mittels Schrauben oder Bolzen [siehe Verbindungsmittel (6) (6') (6 ") (6···) in den Figuren Fig. 6 sowie Fig. 6a sowie Fig. 7) denkbar sind, welche in konzentrischer Folge rund um den Umfang in der Nähe des Außendurchmessers angebracht sind], denkbar.

Generell kann nach Maßgabe der Erfindung die Verbindung (5) (5') (5 ") (5 ···) des ersten Maschinen- oder Anlagenteils (2) mit dem Maschinenelelement (1), als auch die Verbindung (6) (6') (6 ") (6···) des zweiten Maschinen- oder Anlagenteils (3) mit dem Maschinenelelement (1) entweder über eine formschlüssige Verbindungsmethode erfolgen, oder über eine kraftschlüssige Verbindungsmethode, oder auch über eine stoffschlüssige Verbindungsmethode (Löten; Schweißen; Kleben).

Figur Fig. 6a zeigt beispielhaft, dass ein Maschinen- oder Annlagenteil (2) (3) über innen verzahnte und formschlüssige Verbindungselemente (5) (5') (5 ") (5 ···), etwa einer Verzahnung, mit dem Maschinenelement (1) gekoppelt werden kann, während das andere Maschinen- oder Annlagenteil (2) (3) über die bereits genannten außen liegenden Bohrungen (6) (6') (6 ") (6···) durch Schraub- oder Bolzenverbindungen mit dem Maschinenelement (1) gekoppelt werden kann.

Das Anwendungsbeispiel Fig. 7 ist sehr ähnlich aufgebaut wie Fig. 6a, jedoch in das innen liegende Verbindungsmittel (5) hier ein Spannring, der sich in eine in das mittige Loch des Maschinenelementes (1) einzubringende Welle aufspannt, während der Spannring in eine konzentrische Nut im Maschinenelement (1) eingespannt ist.

In Fig. 8a wurde das Verbindungsprinzip ais Fig. 6a umgekehrt, das heißt hier ist dass eine Maschinen- oder Annlagenteil (2) (3) an der äußeren Seite über formschlüssige Verbindungselemente (6) (6') (6 ") (6 ···), beispielsweise mittels Verzahnung, mit dem Maschinenelement (1) gekoppelt, während das andere Maschinen- oder Annlagenteil (2) (3) in diesem Fall mittels innen liegender Schraub-oder Bolzenverbindung (5) (5 ') (5 ") (5···) mit dem Maschinenelement (1) gekoppelt werden kann.

**Bezugszeichenliste für anhängende Zeichnungen:**

| | |
|---|---|
| (1) | Kreis- oder scheibenförmiges mechanisches Maschinenelement |
| (2) | Erstes Maschinen- oder Anlagenteil |
| (3) | Zweites Maschinen- oder Anlagenteil |
| (4) | (gemeinsame) Drehachse; Rotationsachse |
| (5)(5 ') (5 ") (5···) | Mittel zur Ein- und Weiterleitung der mechanischen Kräfte am ersten Maschinen- oder Anlagenteil |
| (6)(6 ') (6 ") (6···) | Mittel zur Ein- und Weiterleitung der mechanischen Kräfte am zweiten Maschinen- oder Anlagenteil |
| (7) | Erste Seite des Maschinenelementes (1), dem ersten Maschinen- oder Anlagenteil zugewandt |
| (8) | Zweite Seite des Maschinenelementes (1), dem zweiten Maschinen-oder Anlagenteil zugewandt |
| (F1) | aus Moment resultierende Kräfte vom ersten Maschinen- oder Anlagenteil |
| (F2) | aus Moment resultierende Kräfte vom zweiten Maschinen- oder Anlagenteil |
| (R1) | Erster Abstand von der gemeinsamen Drehachse (4) |

(R2)                Zweiter Abstand von der gemeinsamen Drehachse (4)

(VB)                Bereich erhöhter Verformbarkeit

(S)                 Axiale Breite des Maschinenelementes (1)

(D)                 Durchmesser des Maschinenelementes (1)

(MA)                Jeweilige Mittenachse des Maschinen- oder Anlagenteils

(M)                 Drehmoment


## Patentansprüche

1. Kreis- oder scheibenförmiges mechanisches Maschinenelement (1) zur Koppelung beziehungsweise Kupplung benachbarter Maschinen- oder Anlagenteile (2) (3), vorzugsweise in axialer Richtung, insbesondere zur nachgiebigen Koppelung beziehungsweise Kupplung, und zur Übertragung von Momentenwirkung (M) von einem ersten Maschinen- oder Anlagenteil (2) auf einen zweiten Maschinen- oder Anlagenteil (3), wobei die zu übertragenden Momente um eine gemeinsame Drehachse (4) wirken, und wobei das mechanische Maschinenelement (1) Mittel (5) (5 ') (5 ") (5 ··) zur Ein- und Weiterleitung der mechanischen Kräfte (F1) (F2) der auf seiner ersten Seite (7) als auch solche Mittel (6) (6') (6 ") (6···) auf der korrespondierenden Seite (8) besitzt, **gekennzeichnet dadurch, dass**

   - die Lage der Mittel (5) (5 ') (5 ") (5···) zur Ein- und Weiterleitung der mechanischen Kräfte auf der ersten Seite (7) in einem ersten Abstand (R1) von der gemeinsamen Drehachse (4) liegen,
   - wobei die Lage der Mittel (6) (6') (6 ") (6···) zur Ein- und Weiterleitung der mechanischen Kräfte auf der korrespondierenden Seite (8) in einem zweiten Abstand (R2) von der gemeinsamen Drehachse (4) liegen.

2. Kreis- oder scheibenförmiges mechanisches Maschinenelement (1) nach Anspruch 1 **gekennzeichnet dadurch, dass**
   diese Abstände (R1) (R2) von unterschiedlichem Betrag sind, insbesondere unterschiedlich groß.

3. Kreis- oder scheibenförmiges mechanisches Maschinenelement (1) nach Anspruch 1 **gekennzeichnet dadurch, dass**
   das mechanische Maschinenelement (1) einen konzentrisch um seine Rotationsachse (4) angeordneten Bereich erhöhter Verformbarkeit (VB) aufweist, welcher sich zwischen den Abständen (R1) (R2) befindet.

4. Kreis- oder scheibenförmiges mechanisches Maschinenelement (1) nach Anspruch 3 **gekennzeichnet dadurch, dass**
   der Bereich erhöhter Verformbarkeit (VB) eine axiale Verformung des Maschinenelementes (1) parallel seiner Rotationsachse (4) zulässt, sofern entsprechend starke Kräfte (F1) (F2) in dieser Richtung wirken.

5. Kreis- oder scheibenförmiges mechanisches Maschinenelement (1) nach Anspruch 2 **gekennzeichnet dadurch, dass**
   diese Abstände (R1) (R2) aber auch von ähnlichem Betrag sein können, insbesondere nahezu gleich groß.

6. Kreis- oder scheibenförmiges mechanisches Maschinenelement (1) nach Anspruch 1 **gekennzeichnet dadurch, dass**
   die axiale Verformbarkeit proportional ist zur Fläche des Bereichs erhöhter Verformbarkeit (VB), insbesondere bei größerer Fläche des Bereichs erhöhter Verformbarkeit (VB) eine stärkere axiale Verformung des Maschinenelementes (1) entsteht.

7. Kreis- oder scheibenförmiges mechanisches Maschinenelement (1) nach Anspruch 1 **gekennzeichnet dadurch, dass** zumindest ein Teil des konzentrischen Bereiches zwischen beiden Abständen (R1) (R2) nicht ebenflächig gestaltet ist, sondern mindestens eine Erhebung und Vertiefung aufweist, insbesondere eine Vielzahl von Erhebungen und Vertiefungen aufweist.

8. Kreis- oder scheibenförmiges mechanisches Maschinenelement (1) nach Anspruch 7 **gekennzeichnet dadurch,**

**dass** der jeweilige Teil des konzentrischen Bereiches zwischen beiden Abständen (R1) (R2) faltenartig ausgestaltet ist.

9. Kreis- oder scheibenförmiges mechanisches Maschinenelement (1) nach einem der vorgenannten Ansprüche **gekennzeichnet dadurch, dass** die gestreckte Länge des Materials in diesem konzentrischen Bereich größer ist als die Differenz |R2| - |R1|der Beträge der beiden Abstände (R1) (R2).

10. Kreis- oder scheibenförmiges mechanisches Maschinenelement (1) nach einem der vorgenannten Ansprüche **gekennzeichnet dadurch, dass**
dieser Teil des konzentrischen Bereiches **gekennzeichnet ist durch** höhere axiale Nachgiebigkeit als die Bereiche, in denen die Mittel (5) (5') (5 ") (5···) (6) (6 ') (6 ") (6···) zur Ein- und Weiterleitung der mechanischen Kräfte (F1) (F2) angebracht sind, insbesondere **durch** eine nach Belastung zurückfedernde Elastizität charakterisiert ist, beispielsweise federstahlartige Elastizität, aufweist.

11. Kreis- oder scheibenförmiges mechanisches Maschinenelement (1) nach einem der vorgenannten Ansprüche **gekennzeichnet dadurch, dass**
das mechanische Maschinenelement (1) als einteiliges oder einstückiges Teil, insbesondere als einteiliges oder einstückiges Vollgussteil, ausgeführt ist, und die Mittel zur Ein- und Weiterleitung der mechanischen Kräfte (F1) (F2) verschiedenartig ausgestattet sein können, jedoch stets jeweils mindestens eine kraftschlüssige oder formschlüssige oder kraft- und formschlüssige Verbindung zwischen dem Maschinenelement (1) und dem jeweiligen Maschinen- oder Anlagenteil (3) (4) herstellen.

12. Kreis- oder scheibenförmiges mechanisches Maschinenelement (1) nach einem der vorgenannten Ansprüche **gekennzeichnet dadurch, dass** die Mittel zur Ein-und Weiterleitung der mechanischen Kräfte (F1) (F2) verschiedenartig ausgestattet sein können, beispielsweise als unterschiedlich oder auch identisch geformte Ausnehmungen zur formschlüssigen Aufnahme von Passelementen oder Zahnelementen, im Besonderen aber auch Befestigungselemente für Niet,-oder Stiftverbindungen, insbesondere auch Ausnehmungen für Passfederverbindungen aufweisen.

13. Kreis- oder scheibenförmiges mechanisches Maschinenelement (1) nach einem der vorgenannten Ansprüche **gekennzeichnet dadurch, dass** die Mittel zur Ein-und Weiterleitung der mechanischen Kräfte (F1) (F2) ausgeführt sein können als Flansche für Schweiß- oder Lötverbindungen, oder ausgeführt sein können nach dem Nut- und Feder-Prinzip.

14. Kreis- oder scheibenförmiges mechanisches Maschinenelement (1) nach Anspruch 1 **gekennzeichnet dadurch, dass**
das mechanische Maschinenelement (1) drehmomentsteif ist und axiale Versätze ausgleicht und die axiale Breite (S) des Maschinenelementes wesentlich geringer ist als dessen Durchmesser (D), vorzugsweise beträgt diese (S) höchstens ein Drittel von dem Durchmesser (D), insbesondere beträgt diese (S) höchstens ein Fünftel von dem Durchmesser (D), beispielsweise betragen D = 30 cm und S=3cm.

15. Kreis- oder scheibenförmiges mechanisches Maschinenelement (1) nach Anspruch 1 **gekennzeichnet dadurch, dass**
dessen Koppelung oder Kuppelung an benachbarte Maschinen- oder Anlagenteile (2) (3) nicht zwangsweise zentrisch zu dessen Drehachsen zu erfolgen hat, sondern dass die jeweilige Mittensachse (M) des jeweiligen Maschinen- oder Anlagenteiles (2) (3) parallel versetzt sein kann zur Rotationsachse (4) des mechanisches Maschinenelementes (1).

Fig. 1                          Fig. 1a

Fig. 2

Fig. 2a

Fig. 2b

Fig. 3                    Fig. 3a

Fig. 3b

Fig. 4

Fig. 5

SCHEMATISCH:

Fig. 5a

SCHEMATISCH:

Fig. 5b

SCHEMATISCH:

Fig. 5c

1

8

4

VB

5

6 ; 6 ' ; 6 '' ; 6 ⋯

7

Fig. 6

8

1

4

VB

5 ; 5 ' ; 5 '' ; 5 ⋯

6 ; 6 ' ; 6 '' ; 6 ⋯

7

Fig. 6a

Fig. 7

Fig. 7a

D 2

D 1

1

S

4

Fig. 7b

1

8

4

VB

5 ; 5 ' ; 5 " ; 5 ⋯

6 ; 6 ' ; 6 " ; 6 ⋯

7

Fig. 8a

Europäisches
Patentamt

European
Patent Office

Office européen
des brevets

# EUROPÄISCHER RECHERCHENBERICHT

Nummer der Anmeldung

EP 11 00 7058

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 97/48914 A1 (LUCAS AEROSPACE POWER TRANSMIS [US]) 24. Dezember 1997 (1997-12-24) * Abbildungen * ----- | 1-15 | INV. F16D3/77 F16D3/04 |
| X | EP 0 534 926 A2 (GEISLINGER CO SCHWINGUNGSTECHN [AT] GEISLINGER CO SCHWINGUNGSTECHN [DE]) 31. März 1993 (1993-03-31) * Abbildungen 1-3 * ----- | 1-15 | |
| X | US 5 219 314 A (HER KENNETH K [US] ET AL) 15. Juni 1993 (1993-06-15) * Abbildungen * ----- | 1-6,9-15 | |
| X | DE 199 12 797 A1 (MANNESMANN AG [DE]) 28. September 2000 (2000-09-28) * Abbildungen 5,6 * ----- | 1-15 | |
| X | US 6 077 165 A (JEWELL HOLLIS [US]) 20. Juni 2000 (2000-06-20) * Abbildungen * ----- | 1-15 | RECHERCHIERTE SACHGEBIETE (IPC) F16D |
| X | DE 35 17 681 A1 (KOEHNE WOLFGANG) 20. November 1986 (1986-11-20) * Abbildungen 1,2 * ----- | 1-15 | |

Der vorliegende Recherchenbericht wurde für alle Patentansprüche erstellt

| Recherchenort | Abschlußdatum der Recherche | Prüfer |
|---|---|---|
| München | 23. Januar 2012 | Foulger, Matthew |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 00 7058

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2012

| Im Recherchenbericht angeführtes Patentdokument | Datum der Veröffentlichung | Mitglied(er) der Patentfamilie | Datum der Veröffentlichung |
|---|---|---|---|
| WO 9748914 A1 | 24-12-1997 | AT 214791 T | 15-04-2002 |
| | | DE 69711180 D1 | 25-04-2002 |
| | | DE 69711180 T2 | 14-11-2002 |
| | | EP 0906518 A1 | 07-04-1999 |
| | | ES 2173462 T3 | 16-10-2002 |
| | | JP 2000514160 A | 24-10-2000 |
| | | WO 9748914 A1 | 24-12-1997 |
| EP 0534926 A2 | 31-03-1993 | AT 395639 B | 25-02-1993 |
| | | DE 59205746 D1 | 25-04-1996 |
| | | EP 0534926 A2 | 31-03-1993 |
| | | ES 2084334 T3 | 01-05-1996 |
| | | JP 5196053 A | 06-08-1993 |
| US 5219314 A | 15-06-1993 | EP 0541724 A1 | 19-05-1993 |
| | | JP H05508468 A | 25-11-1993 |
| | | US 5219314 A | 15-06-1993 |
| | | WO 9202741 A1 | 20-02-1992 |
| DE 19912797 A1 | 28-09-2000 | AT 500630 A1 | 15-02-2006 |
| | | DE 19912797 A1 | 28-09-2000 |
| US 6077165 A | 20-06-2000 | KEINE | |
| DE 3517681 A1 | 20-11-1986 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19812223

- DE 19812223 A1

**In der Beschreibung aufgeführte Nicht-Patentliteratur**

- **VON KUPPLUNGEN.** Kupplungen dienen der festen oder beweglichen, starren oder elastischen und, falls betrieblich bedingt, der ein- und ausrückbaren Verbindung von Wellen und auch anderen Bauteilen zur Übertragung von Drehmomenten. 1976